# EUROPEAN PATENT SPECIFICATION

(11) **EP 0 533 498 B1**
(45) Date of publication and mention of the grant of the patent: **15.01.1997**
(21) Application number: 92308555.9
(22) Date of filing: 18.09.1992
(51) Int. Cl.: G05B 13/02

(54) **PID control unit**
PID-Regeleinrichtung
Régulateur P.I.D.

(30) Priority: 20.09.1991 JP 241443/91
(43) Date of publication of application: 24.03.1993
(73) Proprietor: OMRON CORPORATION, Kyoto 616 (JP)
(72) Inventor: Ueda, Tamio 117 Omron Takatsuki, Takatsuki-city, Osaka (JP); Nagami, Yoshihiro, Kyoto (JP); Saito, Yumi, Yawata-city, Kyoto (JP); Zhang, Zhiming, Hanazono Ukyo-ku, Kyoto (JP)
(74) Representative: Calderbank, Thomas Roger

(56) References cited:
- EP-A- 0 417 593
- US-A- 4 754 391
- US-A- 4 864 490
- US-A- 4 881 160

## Description

This invention relates to a PID control unit, and more particularly to an improved self control type PID control unit capable of automatically setting PID parameters to optimum values in accordance with a controlled system. PID control is also know as proportional-plus-integral-plus-derivative control.

In a conventional PID control unit, PID control parameters are determined by an auto-tuning method employing limit cycle in which a response wave form is oscillated by applying a predetermined pattern of manipulated variable to a controlled system and PID control parameters are properly set by identifying characteristic of the controlled system in view of the response wave form.

Another system employing a limit cycle is disclosed in US-A-4754391. In response to an external instruction, or detection of an abnormal state, PID control is interrupted and a non-linear feedback applied to the controlled system. Recalculated control parameters are derived from properties of the stable limit cycle attained.

By contrast, in another conventional PID control unit, PID control parameters are determined by a step response method in which step manipulated variable is applied to a controlled system, PID control parameters are set by identifying characteristic of the controlled system in view of its response wave form and thereafter a conventional closed loop control is executed. The first conventional auto-tuning method, however, has the disadvantages that there are some controlled systems in which it cannot be applied or identification consumes time since the response wave form is oscillated. The step response method needs an experimental operation prior to the common closed loop control to identify characteristic of the controlled system.

Therefore, a desired aim of this invention to provide a self control type PID control unit which does not need oscillating a response wave form nor any experimental operation for setting PID control parameters.

Accordingly, the present invention provides a self control type PID control unit comprising:
step manipulated variable output means for outputting a step manipulated variable; and
PID control means for generating a manipulated variable based on an error between a reference and a controlled variable obtained from the controlled system; wherein the unit further comprises:
control mode switching means for applying said step manipulated variable to the controlled systems to identify a characteristic of the controlled system by a step response method;
identification means for successively computing by a predetermined sampling period the idle time and the slope according to a change of the controlled variable by a step response of the controlled system applied by the step manipulated variable to provide an output, the control mode switching means stopping the application of the step manipulated variable to move to PID control by said PID control means when idle time and slope successively obtained in accordance with a change of controlled variable reaches a predetermined condition, said PID control being control of the controlled system by a PID loop; and
setting means for computing PID control parameters based on said idle time and said slope computed by said identification means after reaching said predetermined condition to be set to said PID control means.

Thus, according to this PID control unit, in order to identify characteristic of a controlled system, idle time and slope is successfully computed on the basis of a response wave form produced by applying a step manipulated variable, the sequence moves to a PID control when the computed idle time and slope reaches a predetermined condition, and PID control parameters are computed out based on the idle time and slope to be set, whereby the conventional auto tuning for oscillating a response wave form is not necessary to be employed and step response can be followed by PID control.

A better understanding of this invention may be had from a consideration of the following detailed description taken in conjunction with the accompanying drawings in which:
Fig. 1 is a schematic circuit block diagram of a PID control unit according to a preferred embodiment of this invention;
Figs. 2(A) and 2(B) shows wave forms to explain computation of slope Rn and idle time Ln of the PID control unit; and
Fig. 3 is a flow chart of an operation in the unit.

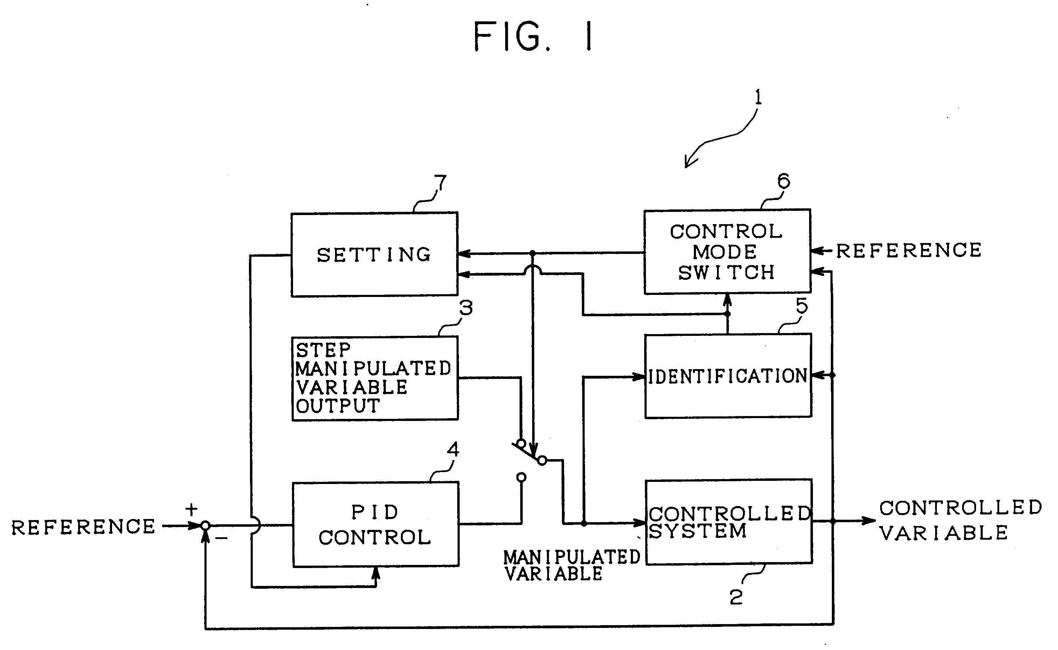

Returning, now, to Fig. 1, there is shown a self control type PID control unit or device 1 as a preferred embodiment of this invention in which PID control parameters are automatically adjusted to optimum values in accordance with a controlled system. This control device does not need any conventional oscillation of a response wave form, nor any experimental operation apart from a conventional closed loop control. The PID control device 1 includes a step manipulated variable output unit 3 for generating a step variable having a 100% manipulated variable, a PID control unit 4 for a PID control, a control mode switching unit 6 for applying the step manipulated variable to a controlled system 2 and for stopping the application of the step manipulated variable to move to the PID control by PID control unit 4 when idle time Ln and slope Rn successively obtained from an identification unit 5 described later reaches a predetermined condition to identify characteristic of the controlled system, the identification unit 5 for successively computing by a predetermined sampling period the idle time Ln and the slope Rn corresponding to a change of a controlled variable of controlled system 2 to be applied to setting unit 7 and identification unit 5, and setting unit 7 for computing PID control parameters based on the idle time Ln and the slope Rn computed by the unit 5 after reaching the above-mentioned predetermined condition and for changing the PID control parameters of PID control unit 4 to the computed PID control parameters when identification is fully executed.

The control mode switching unit 6 switches the manipulated variable applied to the controlled system 2 to the maximum step manipulated variable from the step manipulated variable output unit 3 to move to a self tuning for setting PID control parameters when the reference is changed and the current controlled variable is out of a proportional band. When the idle time Ln and the slope Rn successfully obtained from identification unit 5 reaches a predetermined condition, viz., the following equation (1) becomes unsatisfied in this embodiment, the application of the step manipulated variable ceases and the PID control by PID control unit 4 is initiated:$\text{current controlled variable (y) + slope (Rn') x idle time (Ln') < reference}$ wherein "Rn'" represents the maximum slope computed until then and "Ln"' represents idle time corresponding to the slope Rn'.

Accordingly, in this embodiment, the application of step manipulated variable continues unless exceeds the reference, and the operation moves to PID control when the above equation (1) becomes unsatisfied.

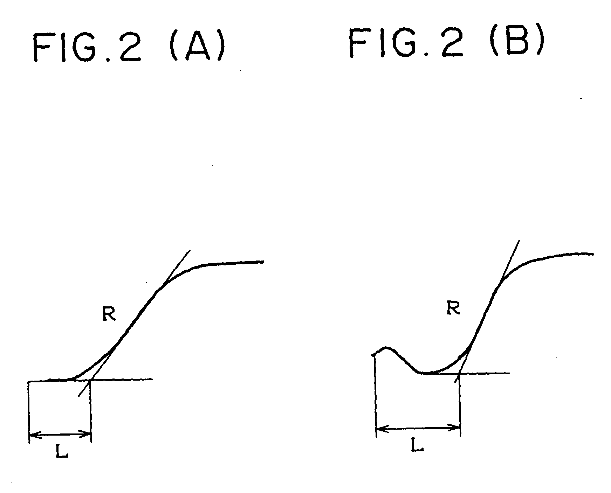

The identification unit 5 successively computes idle time Ln and slope Rn according to change of a controlled variable by step response of the controlled system regarding the step manipulated variable as illustrated in Figs. 2(A) and 2(B) for application to control mode switching unit 6 and setting unit 7. Fig. 2(A) shows the maximum slope R and idle time L when an initial state is a balanced condition, and Fig. 2(B) shows the maximum slope R and idle time Ln when an initial state is an unbalanced condition. The slope Rn of this embodiment is computed as an average value of eight sampling by a 0.5 second sampling period. The detection point of slope Rn is a center of the eight sampling, and idle time Ln is produced by computing time from a time point when a step manipulated variable is applied to a time point when the slope Rn crosses as shown in Figs. 2(A) and 2(B). The maximum slope R is obtained when an larger slope Rn is not obtained even if the application of step manipulated variable continues. Accordingly, if identification is fully executed, the maximum slope R is provided. Thus, the identification unit 5 successfully computes slope Rn and idle time Ln for every 0.5 seconds.

The setting unit 7 of this embodiment judges whether or not the maximum slope R has been precisely obtained from identification unit 5 prior to a time point when the above-mentioned predetermined condition is reached and the application of step manipulated variable is finished. When the maximum slope R has been obtained, identification is regarded as sufficient and PID control parameters are computed based on the maximum slope and corresponding idle time L to be set to the PID control unit 4 for executing PID control by the set PID control parameters.

If the maximum slope R has not been obtained from identification unit 5 prior to the finish of the application of step manipulated variable after reaching the predetermined condition, the identification is regarded to be insufficient. Accordingly, as described later, the identification unit 5 continues to compute slope Rn and idle time Ln watching controlled variable during the period of idle time Ln to compute PID control parameters based on the maximum slope Rn and idle time Ln made until then. If its proportional gain Kp is smaller than the proportional gain of PID control parameters previously set by PID control unit 4, viz. in a safety side, the PID-control parameters of control unit 4 are replaced by the computed PID control parameters. Thereafter, the computation of slope Rn and idle time Ln continues during the idle time Ln to compute PID control parameters in a same manner. If the proportional gain Kp of the computed parameters is smaller or in a safety side, the PID control parameters of unit 4 are replaced by the computed PID control parameters.

In this embodiment, step manipulated variable output unit 1, PID control unit 4, control mode switching unit 6, identification unit 5 and setting unit 7 are constituted with a micro-computer.

Thus, the PID control device 1 identifies characteristic of a rise of controlled system 2 by a step response method on changing the reference, moves to a PID control when idle time and slope successively obtained at the rise reaches a predetermined condition, and computes PID control parameters based on the idle time and slope obtained so far. If the identification is fully executed, the computed PID control parameters are immediately set. If it is not fully executed, the PID control device 1 further watches the state to compare a proportional gain of the newly computed PID control parameters with the proportional gain of previously set PID control parameters, and the currently computed PID control parameters are set when the parameters are on a safe (stable) side.

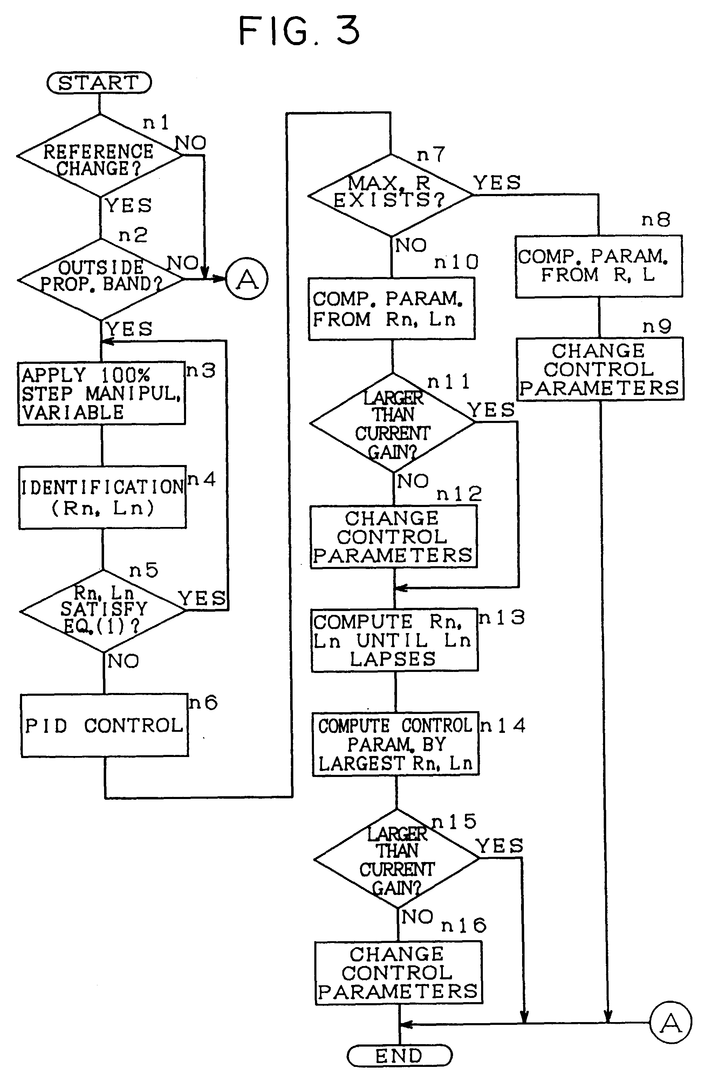

Returning to Fig. 3, there is shown a flow chart of the PID control device. In an initial step n1, it is inquired if a reference is changed. If the reference is changed, the sequence moves to a step n2 where the current controlled variable is inquired to be outside a proportional band. If it is outside, the sequence moves to a self tuning to apply 100% step manipulated variable (step n3). In a step n4, idle time Ln and slope Rn is successfully computed for identification based on change of the controlled variable by a step response applied to the controlled system. In a step n5, it is inquired if the idle time Ln and slope Rn produced by the identification satisfies the above-mentioned equation (1). If it satisfies, the sequence from step n3 to step n5 is repeated until a No response is produced in step n5. If the equation (1) is unsatisfied, the application of step manipulated variable ceases and the sequence moves to PID control in a step n6. In a step n7, it is inquired if the maximum slope R has been obtained by the identification until the moment.

If the maximum slope R is obtained, the identification is judged to be sufficient, PID control parameters are computed based on the maximum slope and its corresponding idle time L in a step n8, and the PID control parameters of PID control unit 4 are changed by the computed PID control parameters in a step n9 for completion.

If the maximum slope R is not obtained in step n7, the identification is judged to be insufficient and PID control parameters are computed based on the largest slope Rn and idle time Ln among slopes obtained up to that point in a step n10. In a step n11, it is inquired if the proportional gain kp is larger than the proportional gain previously set in PID control unit 4 or on a danger side. If the gain Kp is not larger or it is on a safe side, the PID control parameters of PID control unit 4 are changed to the computed PID control parameters in a step n12. If the gain Kp is larger in step n11, the sequence moves to a step n13 without changing PID control parameters.

In the step n13, the slope Rn and idle time Ln are computed until further idle time Ln elapses after finish of application of the step manipulated variable, and in a step n14 PID control parameters are computed based on the largest slope and idle time among slopes obtained up to that point. In a step n15, it is inquired if the proportional gain Kp is larger than the proportional gain of the PID control parameters set in the PID control unit. If the proportional gain Kp is not larger in step n15, the current computed PID control parameters are set to PID control unit 4 to be finished in a step n16. If the gain Kp is larger, the sequence is finished without changing PID control parameters because the set PID control parameters are proper.

Thus, according to this embodiment, PID control is executed after identification about characteristic of rise, so that conventional oscillation of response wave form is not necessary and any experimental operation apart from a general closed loop control also is unnecessary. Moreover, in this embodiment, when the maximum slope R has not been obtained or identification is insufficient, the sequence moves to PID control, it is inquired by comparing proportional gains if PID control parameters are changed, whereby PID control parameters are prevented from being changed to danger side and control system is stabled. The identification is executed from characteristic of rise in this embodiment, but, if desired, it may be executed from characteristic of drop. Though in this embodiment it is inquired by comparing proportional gains if PID control parameters are changed, the PID control parameters may be immediately changed without comparing proportional gains.

While there has been described above a particular embodiment of a PID control unit according to this invention, it will be appreciated that this invention is not limited thereto.

It should be noted that PID control is a known method which combines proportional, integral and derivative control actions. This will now be discussed further.

For an automatic closed-loop controller to keep a process variable at its set point, it must know whether the variable is at the correct value. But a YES or NO answer is not enough; the controller must also know, as a minimum, whether the value of the variable is too high or too low. For better control, it must know how much too high or too low the value is, in other words, the magnitude of the control error. For even better control, it may need to know for how long the error existed. For still better control, it may need to know how fast the variable is changing.

These various refinements of control make up different control modes, which are described below, beginning with binary control. A control mode is a specific way in which the input of a controller affects the output.

Binary control - also known as on-off and two-position control - is the simplest of all control modes. It has shortcomings and is the least adaptable of all the types of control, yet it is completely adequate in many cases and is frequently used in process plants. It is also the least costly control and is the type almost always used in home thermostats.

The output of a binary controller is either ON or OFF. Its value depends on the following factors:

The direction of the control error.

The controller action direct or reverse.

In binary control, the process difference, the operating band, between the ON and OFF actions is usually small, as for example, in room temperature control. However, there are cases where the on-off band is intentionally made large in order to minimize the frequency of operation of equipment, such as a pump. This is frequently done for sump level control. A sump is a pit into which liquids drain by gravity. When the sump becomes full, a binary level controller starts a pump that operates until the sump is empty. The controller then stops the pump and the sequence repeats. This kind of binary control is known as differential gap control.

Binary control is simply a switching action, and the same instrument can be used for any other switching operation, for example, to operate an alarm. Then the instrument is tagged as a switch, not as a controller.

Almost all control systems operate with varying process loads. The process load is the amount of material or energy that must be manipulated in order to control the controlled variable. The load depends on whether the system is operating at capacity or less than capacity, on the weather, on the quality of the plant feed, and other factors.

Binary control is theoretically and actually incapable of keeping the controlled variable within a given operating band for more than one process load. At other loads, the band moves up or down, depending on whether the load has increased or decreased. The shift of the control band is called offset or droop, which is small or large depending on the size of the load change.

The offset is a reason why a thermostatically controlled house that is poorly insulated requires the set point to be raised manually.in order to keep the house comfortable when the weather turns colder. This thermostat is a binary controller whose operating band has fallen because the house heating load has increased.

Proportional control, also known as a single-mode control, provides a modulated output that can have any value from bottom to top of the output range. The value depends on several factors; the direction and magnitude of the control error, the gain, or sensitivity of the controller, and the controller action, either direct or reverse.

Sensitivity is normally expressed in terms of proportional gain or often simply gain, which is equivalent to the amount of reaction divided by the amount of stimulus. Gain is defined as the change of output corresponding to a given change of input divided by the change of input. For most controllers, the proportional gain is adjustable. (Instead of the preferred term, proportional gain, the opposite term, proportional band, is sometimes used. Proportional band is the input change divided by the output change and is also usually stated as a percentage).

Like a binary controller, a proportional controller is subject to offset and is incapable of keeping the controlled variable at its set point at more than one process load. The offset is the reason why a thermostatically controlled automobile cooling system runs cooler in cold weather than in hot weather. In this case, the thermostat is a self-actuated regulator that provides only proportional control.

Proportional-plus-integral control is also known as two-mode control, PI control, and automatic-reset control. The integral mode is also called floating control. Just as for proportional control, the controller output is modulated, but the value of the output depends on the following factors:

the direction, magnitude, and duration of the control error.

The gain of the controller, which depends on the proportional gain and the integral gain, both of which are adjustable.

The controller action, direct or reverse.

Because of the integral mode, this controller does not have control offset. At any new steady load, the controller returns the controlled variable to its set point.

Proportional-plus-integral-plus-derivative control is also called three-mode control and PID control. The derivative mode is also called rate action. A three-mode controller modulates its output, whose value depends on the following factors:

The direction, magnitude, duration and rate of change of the control error.

The gain of the controller, which depends on the proportional gain, the integral gain, and the derivative gain, all of which are adjustable.

The controller action, direct or reverse.

The above discussion of control modes is given for the purpose of illustration only.

## Claims

1. A self control type PID control unit comprising:
step manipulated variable output means (9) for outputting a step manipulated variable; and
PID control means (4) for generating a manipulated variable based on an error between a reference and a controlled variable obtained from the controlled system (2);
and characterised by further comprising:
control mode switching means (6) for applying (n3) said step manipulated variable to the controlled system to identify a characteristic of the controlled system (2) by a step response method;
identification means (5) for successively computing (n4) by a predetermined sampling period the idle time and the slope according to a change of the controlled variable (2) by a step response of the controlled system applied by the step manipulated variable to provide an output, the control mode switching means (6) stopping the application of the step manipulated variable to move to PID control by said PID control means when idle time and slope successively obtained in accordance with a change of controlled variable reaches a predetermined condition, said PID control being control of the controlled system by a PID loop; and
setting means (7) for computing (n8, nlO, n14) PID control parameters based on said idle time and said slope computed by said identification means (5) after reaching said predetermined condition to be set to said PID control means (4).

2. A PID control unit according to Claim 1 in which said step manipulated variable output means (3) generates the maximum step manipulated variable.

3. A PID control unit according to Claim 1 or Claim 2 in which said setting means (7) sets (n12, n16) said computed PID control parameters only when the proportional gain of said computed PID control parameters is smaller than a proportional gain of PID control parameters previously set in said PID control means (4).

## Patentansprüche

1. Selbstregelnde PID (Proportional, Integral, Differential)-Regeleinheit, umfassend:
sprung- bzw. schrittmanipulierte Variablenausgabemittel (9) zur Ausgabe einer sprungbzw. schrittmanipulierten Variablen; und
PID-Regelmittel (4) zur Erzeugung einer manipulierten Variablen basierend auf einem Fehler zwischen einem Bezugswert und einer geregelten Variablen, die aus dem geregelten System (2) erhalten wird;
dadurch gekennzeichnet, daß sie weiters umfaßt:
Regelmodusumschaltmittel (6) zum Anlegen (n3) der sprung- bzw. schrittmanipulierten Variablen an das geregelte System, um eine Charakteristik des geregelten Systems (2) durch ein Sprung- bzw. Schrittantwortverfahren zu identifizieren;
Identifizierungsmittel (5) zum sukzessiven Errechnen (n4) durch eine vorbestimmte Samplingperiode der Tot- bzw. Leerzeit und Steigung bzw. Neigung gemäß einer Änderung der geregelten Variablen (2) mittels einer Sprung- bzw. Schrittantwort des geregelten Systems, angelegt durch die sprung- bzw. schrittmanipulierte Variable, um einen Output zu liefern, wobei das Regelmodusumschaltmittel (6) das Anlegen der sprung- bzw. schrittmanipulierten Variablen stoppt, um zur PID-Regelung durch das PID-Regelmittel zu gelangen, wenn die sukzessive gemäß einer Änderung der geregelten Variablen erhaltene Tot- bzw. Leerzeit und Steigung bzw. Neigung einen vorbestimmten Zustand erreichen, wobei die PID-Regelung die Regelung des geregelten Systems durch eine PID-Schleife ist; und
Einstellmittel (7) zum Errechnen (n8, n10, n14) von PID-Regelparametern basierend auf der Tot- bzw. Leerzeit und Steigung bzw. Neigung, die durch das Identifizierungsmittel (5) nach dem Erreichen des vorbestimmten Zustands errechnet werden, auf die (das) PID-Regelmittel (4) eingestellt wird bzw. werden.

2. PID-Regeleinheit nach Anspruch 1, worin das sprung- bzw. schrittmanipulierte Variablenausgabemittel (3) die maximale sprung- bzw. schrittmanipulierte Variable erzeugt.

3. PlD-Regeleinheit nach Anspruch 1 oder 2, worin das bzw. die Einstellmittel (7) die errechneten PID-Regelparameter nur dann einstellt bzw. einstellen (n12, n16), wenn die Proportionalverstärkung der errechneten PID-Regelparameter kleiner als eine Proportionalverstärkung von zuvor im PID-Regelmittel (4) eingestellten PID-Regelparametern ist.

## Revendications

1. Unité de régulation par action PID du type à auto-régulation comprenant :
un moyen (9) de sortie d'écart à un échelon pour produire un écart à un échelon ; et
un moyen (4) de régulation par action PID pour produire un écart sur la base d'une erreur entre une référence et une variable de contrôle et obtenu à partir du système contrôlé (2) ;
et caractérisée en ce qu'elle comprend de plus :
un moyen (6) de commutation en mode de commande pour appliquer (n3) ledit écart à un échelon au système contrôlé pour identifier une caractéristique du système contrôlé (2) par un procédé de réponse à un échelon ;
un moyen d'identification (5) pour successivement calculer (n4) par une période d'échantillonnage prédéterminée le temps de repos et la pente selon un changement de la variable contrôlée (2) par une réponse à un échelon du système contrôlé appliqué par l'écart à un échelon pour produire une sortie, le moyen de commutation en mode de contrôle (6) arrêtant l'application de l'écart à un échelon pour se déplacer à la régulation PID par ledit moyen de régulation par action PID lorsque le temps de repos et la pente successivement obtenus selon un changement de variable contrôlée atteignent une condition prédéterminée, ladite régulation par action PID étant un contrôle du système contrôlé par une boucle PID ; et
un moyen de réglage (7) pour calculer (n8, n10, n14) des paramètres de régulation PID basés sur ledit temps de repos et ladite pente calculés par ledit moyen d'identification (5) après avoir atteint ladite condition prédéterminée pour être réglé audit moyen de régulation par action PID (4).

2. Unité de régulation par action PID selon la revendication 1 dans laquelle le moyen de sortie d'écart à un échelon (3) produit l'écart à un échelon maximum.

3. Unité de régulation par action PID selon la revendication ou la revendication 2 dans laquelle le moyen de réglage précité (7) établit (n12, n16) les paramètres calculés précités de régulation PID seulement lorsque le gain proportionnel desdits paramètres calculés de régulation PID est inférieur à un gain proportionnel de paramètres de régulation PID initialement établis dans le moyen précité de régulation par action PID (4).
